# NEUE EUROPÄISCHE PATENTSCHRIFT

(11) **EP 0 891 268 B2**
(45) Veröffentlichungstag und Bekanntmachung des Hinweises auf die Entscheidung über den Einspruch: **28.05.2003**
(45) Hinweis auf die Patenterteilung: 01.09.1999
(21) Anmeldenummer: 97921809.6
(22) Anmeldetag: 28.04.1997
(51) Int. Cl.: B60R 21/26

(54) **GASGENERATOR**
GAS GENERATOR
GENERATEUR DE GAZ

(30) Priorität: 30.04.1996 DE 19617249
(43) Veröffentlichungstag der Anmeldung: 20.01.1999
(73) Patentinhaber: TRW Airbag Systems GmbH & Co. KG, 84544 Aschau am Inn (DE)
(72) Erfinder: REICHTHALHAMMER, Georg, D-83349 Freutsmoos (DE); SOMMER, Karl-Heinz, D-82131 Stockdorf (DE)
(74) Vertreter: Kitzhofer, Thomas, Dipl.-Ing.
(86) Internationale Anmeldenummer: EP9702184
(87) Internationale Veröffentlichungsnummer: WO97041007

(56) Entgegenhaltungen:
- DE-A- 4 102 615
- DE-A- 4 227 547
- DE-C- 3 917 460
- US-A- 4 249 673
- US-A- 4 437 681
- US-A- 4 561 675
- PATENT ABSTRACTS OF JAPAN vol. 018, no. 134 (C-1176), 4.März 1994 & JP 05 317685 A (ASAHI CHEM IND CO LTD), 3.Dezember 1993,

## Beschreibung

Die Erfindung betrifft einen Gasgenerator für ein Airbagsystem eines Fahrzeugs mit einer Brennkammer zur Unterbringung eines aktivierbaren Treibstoffs, die Ausströmöffnungen für ein nach der Aktivierung des Treibstoffs entstehendes Gas aufweist, wobei die Ausströmöffnungen innerhalb der Brennkammer durch eine Filtervorrichtung abgedeckt sind.

Ein derartiger Gasgenerator ist durch die US-A-4,561,675 bekannt geworden.

Im Falle eines harten Aufpralls eines Kraftfahrzeugs erzeugen sogenannte Gasgeneratoren eines Airbagsystems Gas zum Füllen eines Luftsackes, der dann einen Fahrzeuginsassen vor dem Aufprall auf harte Fahrzeuginnenteile wie das Lenkrad oder die Seitenverkleidungen schützt. Diese Gasgeneratoren sind im allgemeinen von pyrotechnischer Art, so daß durch einen Stromimpuls von der einen Fahrzeugcrash erkennenden Sensorik eine Anzündeeinheit aktiviert wird. Die Anzündung der sogenannten Anzündladung erzeugt heiße Partikel, die dann auf die Oberflache eines meist in Tablettenform vorliegenden Treibstoffs treffen, der dann selbst zündet und in der sogenannten Brennkammer unter einem hohen Druck abbrennt. Durch den Abbrand des Treibstoffs entsteht ein Gas zum Füllen des Luftsackes. Da neben reinem Gas auch noch flüssige beziehungsweise feste Bestandteile bei der Verbrennung entstehen, sind in dem Gehäuse des Gasgenerators auch entsprechende Filter vorgesehen, durch die der Gasstrom vor Austritt aus dem Gasgenerator gereinigt wird.

Bei dem bekannten Gasgenerator sind in einer Gehäusewand Ausströmöffnungen vorgesehen, durch die entstehendes Gas aus der Brennkammer ausströmen kann. Unmittelbar vor den Ausströmöffnungen befinden sich Filtervorrichtungen, die die Ausströmöffnungen abdecken und an der Innenseite der Gehäusewand der Brennkammer anliegen. Die bekannte Filtervorrichtung ist zweiteilig aufgebaut, so daß sie sich aus zwei Lagen verschiedenen Fltermaterials zusammensetzt. Die Filtervorrichtung dient dazu, zu verhindern, daß sich die Ausströmöffnungen durch die Treibstoff-Tabletten zusetzen können. Weiterhin werden durch die Filtervorrichtung auch Brandrückstande innerhalb der Brennkammer zurückgehalten.

Durch die direkte Anordnung der Filtervorrichtung vor den Ausströmöffnungen findet eine Verringerung des Strömungsquerschnitts der Ausströmöffnungen statt. Dies macht sich um so mehr bemerkbar, je nach dem weiche Maschenweite bzw. Porengröße das Filtermaterial der Filtervorrichtung aufweist. Grundsätzlich ist eine Beeinträchtigung der Gaseinströmung in die Ausströmöffnungen durch das unmittelbar davorliegende Filtermaterial gegeben.

Aufgrund der Strömungswirkung der Ausströmöffnungen wird das Filtermaterial nur im Bereich der Ausstromöffnungen durchströmt. Das restliche Filtermaterial der Filtervorrichtung wird dagegen weitgehend nicht genutzt Folglich kommt es zu einer hohen Belastung des Filtermaterials im Bereich der Ausströmöffnungen. In extremen Fällen kann es zu Ausstanzungen oder zu Lochmustern innerhalb des Filtermaterials kommen. In diesen Fällen kann das in der Brennkammer entstehende Gas nahezu ungehindert aus der Brennkammer ausströmen.

Meist ist die Filtervorrichtung aus einem nicht nachgiebigen, sondern starren Filtermaterial gefertigt. Zusätzlich liegt das starre Filtermaterial an der Innenwand des Gehäuses fest an. Somit können die Treibstoff-Tabletten durch die Fittervorrichtung nicht gepolstert oder abgefedert untergebracht werden. Es kann zu Relativbewegungen zwischen den einzelnen Treibstoff-Tabletten kommen, die Geräusche (Rascheln) verursachen.

In der in der US-A-3 972 545 gezeigten Brennkammer, die axial von einer Zwischenwand begrenzt wird, sind einzelne Filterpakete zur Bildung eines Filters aneinander angrenzend angeordnet, wobei das Filter an der Wand eines hermetisch abgedichteten, mit Treibstofftabletten gefüllten Containers und dieser wiederum großflächig an der Zwischenwand anliegt. Die Ausströmöffnungen in der Zwischenwand sind im Ausgangszustand verschlossen. Eine gleichmäßige Druck- und Gasverteilung ist damit nicht zu erwarten, vielmehr wird sich im Inneren der Brennkammer ein hoher Druck aufbauen. Darüber hinaus werden im Container Relativbewegungen zwischen den Treibstofftabletten auftreten.

Die gattungsgemäße US-A-4 437 681 beschreibt und zeigt einen Gasgenerator mit einem sehr dicken und stabilen Filterpaket, das von der Brennkammerwand beabstandet ist, um eine Expansionskammer zu bilden. Der Treibstoff in der Brennkammer ist jedoch nicht stabilisiert, so daß es zu Bewegungen zwischen den Treibstofftabletten kommen kann.

Aufgabe der Erfindung ist es, einen Gasgenerator mit einer Brennkammer zu schaffen, bei der der Treibstoff auf einfache Weise an Bewegungen gehindert wird.

Aus der US-A-5,219,178 ist ein weiterer Gasgenerator bekannt, bei dem ebenfalls Fihervorrichtungen unmittelbar vor den Ausströmöffnungen befestigt sind. Zur Verbesserung der Temperaturbedingungen im Bereich der Ausströmöffnungen ist bei diesem Gasgenerator eine zusätzliche Trennwand vorgesehen, die die Treibstoff-Tabletten von den Ausströmöffnungen fernhält. Im Bereich der Trennwand sind weitere Strömungskanäle ausgebildet, die wiederum mit Filtersystemen gekoppelt sind, so daß dieser Gasgenerator kompliziert aufgebaut ist. Durch die direkte Anordnung der Filtervorrichtung vor den Ausströmöffnungen besitzt auch dieser Gasgenerator die vorgenannten Nachteile hinsichtlich der Strömungsverhältnisse im Bereich der Ausströmöffnungen.

Bei anderen Gasgeneratoren sind daher einfache Gitternetze als Filtervorrichtung vor den Ausströmöffnungen vorgesehen. Die Nachteile dieser Lösungen liegen darin, daß durch die Gitternetze, die ebenfalls direkt vor den Ausströmöffnungen liegen, der wirksame Strömungsquerschnitt je nach Drahtstärke reduziert wird. Da aus diesem Grund der Drahtdurchmesser nicht zu groß gewählt werden kann, kommt es durch den heißen Gasstrom aus der Brennkammer häufig zum Abschmelzen des Drahtes direkt vor den Ausströmöffnungen. Anschließend gelangen heiße metallische Partikel auch nach außen. Ebenfalls werden wiederum nur die Teile des Drahtgitternetzes belastet, die im Bereich der Ausströmöffnungen vorgesehen sind.

Durch die DE 40 12 893 A1 wird daher eine technische Lehre vorgeschlagen, bei einem Gasgenerator vor den Ausströmöffnungen mehrere Lagen aus Stahlwolle zu befestigen. Die Stahlwolle ist allerdings wiederum unmittelbar vor den Ausströmöffnungen angeordnet, so daß auch hier wiederum die gleichen vorgenannten Probleme hinsichtlich der Strömungsquerschnitte anzutreffen sind. Auch werden auch hier verstärkt diejenigen Teile der Stahlwolle belastet, die sich im Bereich der Strömungsquerschnitte der Ausströmöffnungen befinden.

Aus der DE 39 17 460 C1 ist ein Gasgenerator bekannt, bei dem Treibmittel in einem zylindrischen Gehäuse von einem ebenfalls zylindrischen pertorierten Rückhalteblech umgeben und dadurch von Ausströmöffnungen in dem Gehäuse zurückgehalten wird. Zur Verbesserung der Strömungsverhältnisse im Gehäuse ist das Rückhalteblech mit Sicken oder Rillen versehen, so daß Vertiefungen und Erhebungen alternierend über den Umfang bzw. die Länge des Rückhalteblechs angeordnet sind. Zwischen den Sicken liegende Vertiefungen sind dabei gegenüber von Ausströmöffnungen in dem Gehäuse angeordnet. Durch die auf diese Weise gebildeten Quer- und Längskanäle soll ein Druckwellenausgleich erreicht werden.

Aufgabe der vorliegenden Erfindung ist es daher, einen Gasgenerator der gattungsgemäßen Art derart weiterzuentwickeln, daß der Filtervorgang durch die Filtervorrichtungen im Bereich der Ausströmöffnungen reproduzierbarer und verbessert wird, eine bessere Nutzung des Filtermaterials gegeben ist und eine höhere Lebensdauer der Filtervorrichtung erreicht wird.

Die Aufgabe wird erfindungsgemäß dadurch gelöst, daß die Filtervorrichtung innerhalb der Brennkammer derart befestigt ist, daß der Treibstoff federnd an einer Brennkammerseite der Filtervorrichtung anliegt.

Durch die Beabstandung der Filtervorrichtung von den Ausströmöffnungen findet keine Verringerung der Strömungsquerschnitte im Bereich der Ausströmöffnung statt und das Filtermaterial der Filtervorrichtung kann besser durchströmt werden. Folglich wird das Filtermaterial der Filtervorrichtung gleichmäßiger und über dem gesamten Bereich der Filtervorrichtung genutzt. Die Nutzung des Filtermaterials wird dabei nur noch von der Poren- oder Maschengröße des Filtermaterials bestimmt.

Aufgrund der gleichmäßigeren Strömungsvorgänge innerhalb der Filtervorrichtung kommt es zu einer besseren Temperaturverteilung innerhalb der Filtervorrichtung. Es läßt sich somit vermeiden, daß einzelne partielle Bereiche der Filtervorrichtung zu stark temperaturbelastet werden.

Die Filtervorrichtung teilt die Brennkammer nunmehr in einen Brennraum und einen oder mehrere Expansionsräume. Indem die Filtervorrichtung federnd an dem Treibstoff anliegt, ist keine Relativbewegung der Treibstoff-Tabletten möglich, die zu einer Geräuschbildung führen könnte. Durch die federnde Anlage werden die Treibstoff-Tabletten unter geringer Vorspannung gehalten. Sofern die Filtervorrichtung beweglich innerhalb der Brennkammer gehalten ist, kann der Brennraum je nach Anzahl der noch vorhandenen Treibstoff-Tabletten verkleinert werden. Die Größe des Brennraumes kann dabei an die Anzahl der Teibstoff-Tabletten stufenlos angepaßt werden. Bevorzugt ist es, ein flexibles oder elastisches Filtermaterial für die Filtervorrichtung zu verwenden. Wenn sich nämlich innerhalb des Brennraumes Druckspitzen aufbauen, kann die Filtervorrichtung in Richtung des Expansionsraumes nachgeben. Druckspitzen im Brennraum können dadurch leicht abgebaut werden, so daß es zu einer Druckentlastung kommt. Beispielsweise kann die Filtervorrichtung innerhalb der Brennkammer nur oben und unten befestigt sein, so daß sich der mittlere Bereich der Filtervorrichtung wölben kann. Es wäre auch denkbar, daß die Filtervorrichtung innerhalb der Brennkammer verschieblich angeordnet ist, um auf Druckänderungen reagieren zu können.

Durch den Freiraum (Expansionsraum) vor den Ausströmöffnungen wird der nutzbare Strömungsquerschnitt von der Filtervorrichtung nicht mehr so stark durch die, in Strömungsrichtung gesehen, dahinterliegenden Ausströmöffnungen beeinflußt. Der Strömungsquerschnitt ist vor und nach der Filtervorrichtung nahezu gleich, so daß ein wesentlich größerer Teil der Oberfläche der Filtervorrichtung von den heißen Gaspartikeln durchströmt wird. Folglich werden gleichzeitig mehr Partikel zurückgehalten und der Gasgenerator gibt eine geringere Anzahl dieser Partikel nach außen ab.

Bei einer anderen Ausführungsform besteht die Filtervorrichtung aus einem Gitternetz. Das Gitternetz ist von den Ausströmöffnungen beabstandet, so daß keine Verringerung des wirksamen Strömungsquerschnitts durch die Drähte des Gitternetzes stattfinden kann. Dadurch können die Drähte dicker ausgelegt werden, so daß sie durch heißen Gase nicht mehr abschmelzen und keine Drahtpartikel nach außen gelangen können. Ein weiterer Vorteil dieser Ausführungsform besteht darin, daß durch das Drahtgitter eine nachgiebige Filtervorrichtung zum Abbau von Druckspitzen innerhalb der Brennkammer leicht ausgebildet werden kann.

Zur Verringerung der Herstellungskosten kann das Gitternetz aus einem metallischen oder einem hitzebeständigen Verbund-Werkstoff hergestellt werden. Dies führt zu einer Ausführungsform, die für viele Anwendungsfälle ausreichend ist.

Bei einer besonders bevorzugten Ausführungsform weist die Filtervorrichtung eine in Strömungsrichtung des Gases ausgebildete Sicke auf, deren Sickenboden an einer Innenwand der Brennkammer zwischen den Ausströmöffnungen zur Anlage kommt. Die Sicke unterteilt den Expansionsraum in einen oberen und einen unteren Teil. Die Filtervorrichtung ist bei dieser Ausführungsform oben oder unten in der Brennkammer und zwischen den Ausströmöffnungen lagefixiert. Im Bereich der Ausströmöffnungen ist diese Filtervorrichtung aufgrund der ausgebildeten Sicke nachgiebig und von den Ausströmöffnungen beabstandet. Beispielsweise komml das oben beschriebene Drahtgitter nicht direkt vor den Ausströmöffnungen zur Anlage. Die Tiefe der Sicke kann den funktionalen Bedürfnissen des Gasgenerators angepaßt werden. Es sind aber auch andere Möglichkeiten vorstellbar, den geeigneten Abstand zu den Ausströmöffnungen des Gasgenerators sicherzustellen.

Bei einer Weiterbildung dieser Ausführungsform ist der Sickenboden an der Innenwand der Brennkammer angeschweißt oder durch einen hitzebeständigen Kleber befestigt. Die Befestigung des Sickenbodens gewährleistet eine dauerhafte lagefixierte Anordnung der Filtervorrichtung und damit reproduzierbare Strömungsverhältnisse.

Besonders bevorzugt ist es, daß ein Brennkammerfilter vorgesehen ist, der zwischen dem Treibstoff und der Brennkammerseite der Filtervorrichtung angeordnet ist. Bei dieser Ausführungsform kann ein Feinfilter (Brennkammerfilter) mit einem Grobfilter (Gitternetz) kombiniert werden. Beide Filtervorrichtungen sind von den Ausströmöffnungen beabstandet und besitzen die obengenannten vorteilhaften Eigenschaften.

Wenn die Ausströmöffnungen die Brennkammer mit einer Filterkammer verbinden, können zusätzliche Filtermöglichkeiten vorgesehen werden, um nahezu vollständig sicherzustellen, daß keinerlei heiße Gaspartikel nach außen dringen können.

Bei einer anderen Variante sind die Ausströmöffnungen düsenartig ausgebildet und besitzen vorzugsweise einen Einsatz aus Metall. Dies verbessert die Strömungsverhältnisse des Gases aus der Brennkammer heraus, da bei dieser Ausführungsform eine Strömungshilfe und zielgerichtete Strömungsleitung vorhanden ist.

Eine einfache und leicht handhabbare Bauweise des Gasgenerators wird erreicht, wenn die Filtervorrichtung mit einem Übermaß gegenüber der Größe der Brennkammer gefertigt und im Bereich der Ausströmöffnung durch Einpressen lagefixiert ist.

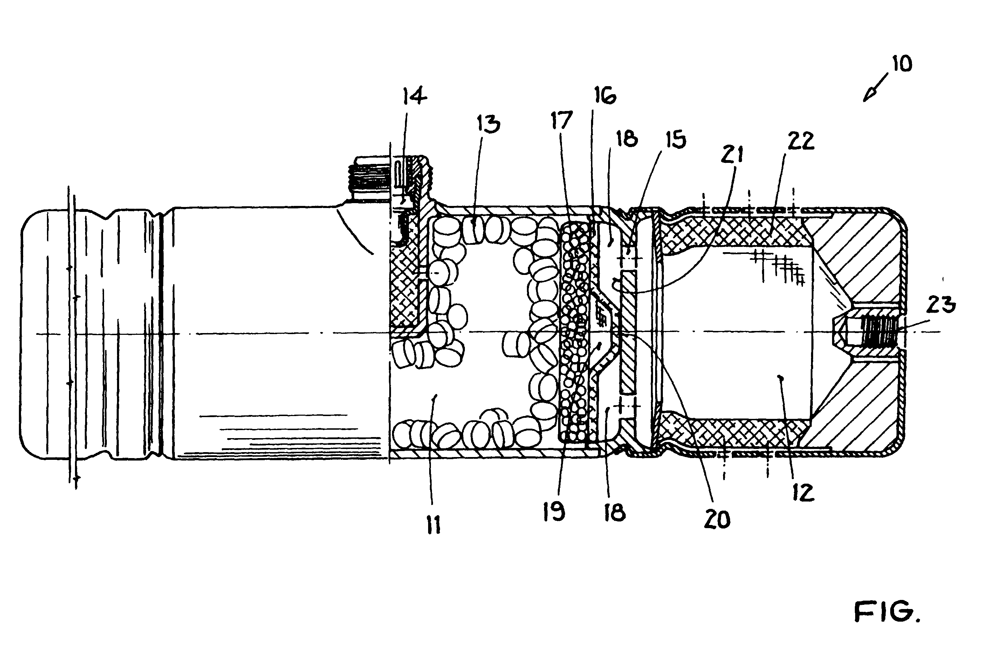

Weitere Vorteile der Erfindung ergeben sich aus der Beschreibung und der Zeichnung.

Die Erfindung ist in einem Ausführungsbeispiel in der Zeichnung dargestellt und wird anhand der nachfolgenden Beschreibung näher erläutert. Die Figur zeigt stark schematisiert ein Ausführungsbeispiel eines erfindungsgemäßen Gasgenerators und ist nicht notwendigerweise maßstäblich zu verstehen.

Die Figur zeigt einen erfindungsgemäßen Gasgenerator teilweise in einer Seitenansicht und teilweise in einem axialen Längsschnitt.

Die Figur zeigt einen Gasgenerator 10, der sich im wesentlichen aus einer Brennkammer 11 und einer daran anschließenden Filterkammer 12 zusammensetzt Das Gehäuse des Gasgenerators 10 ist aus einzelnen miteinander verbundenen Gehäuseteilen zusammengesetzt. Die Gehäuseteile sind fest miteinander verbunden und bestehen aus einem hitzebeständigen Werkstoff. Innerhalb der Brennkammer 11 ist ein in Tablettenform vorliegender Treibstoff 13 untergebracht.

Wenn im Falle eines Aufprallunfalls des Fahrzeugs ein Sensor, der in der Figur nicht dargestellt ist, ein Signal an eine Anzündeeinheit 14 leitet, so wird innerhalb der Anzündeeinheit 14 eine sogenannte Anzündladung entzündet. Bei diesem Vorgang werden heiße Partikel erzeugt und verstärkt, die auf den Treibstoff 13 auftreffen und diesen ebenfalls entzünden. Durch den Abbrand des Treibstoffs 13 entsteht ein Gas, das die Brennkammer 11 durch Abströmöffnungen 15 verlassen und über die Filterkammer 12 in einen Luftsack, der in der Figur ebenfalls nicht gezeigt ist, gelangen kann. Anschließend wird der Luftsack durch das Gas aufgeblasen. Die Abströmöffnungen 15 sind von einer Filtervorrichtung 16 beabstandet Die Filtervorrichtung 16 dient dazu, die austretenden heißen Gasströme vor Verlassen der Brennkammer 11 zu filtern. Zum Filtern des Gasstroms dient ebenfalls ein vor der Filtervorrichtung 16 angeordneter Brennkammerfilter 17. Durch den Abstand der Ausströmöffnungen 15 zur Filtervorrichtung 16 findet keine Verringerung des wirksamen Strömungsquerschnitts durch die Filtervorrichtung 16 statt. Beispielsweise kann die Filtervorrichtung 16 als Drahtgitter ausgebildet werden. Nahezu die gesamte Filtervorrichtung 16 kann von dem heißen Gas durchströmt werden, so daß es vermieden wird, einzelne partielle Bereiche der Filtervorrichtung 16 einer zu starken Temperaturbelastung auszusetzen.

Die Filtervorrichtung 16 unterteilt die Brennkammer 11 in einen Brennraum, in dem der Treibstoff 13 untergebracht ist, und in einen oberen und einen unteren Expansionsraum 18. Die Expansionsräume 18 können sich beim Auftreten von Druckspitzen verringern und dadurch für eine Druckentlastung sorgen.

Die Filtervorrichtung 16 weist eine Sicke 19 auf, deren Sickenboden 20 an einer Innenwand 21 der Brennkammer anliegt. Der Sickenboden 20 kann auch zusätzlich an der Innenwand dauerhaft befestigt sein. Die Sicke 19 dient dazu, einen Abstand zwischen der Filtervorrichtung 16 und den Ausströmöffnungen 15 herzustellen. Die Tiefe der Sicke 19 kann den funktionalen Bedürfnissen des Gasgenerators 10 angepaßt werden.

Das innerhalb der Brennkammer 11 erzeugte Gas kann über die Ausströmöffnungen 15 in die Filterkammer 12 gelangen, dort mit Hilfe eines Filtersystems 22 gereinigt und gegebenenfalls abgekühlt werden. Über eine Öffnung 23 gelangt das Gas schließlich in den nicht gezeigten Luftsack.

## Patentansprüche

1. Gasgenerator (10) für ein Airbagsystem eines Fahrzeugs mit einer Brennkammer (11) zur unterbringung eines aktivierbaren Treibstoffs (13), die Ausströmöffnungen (15) für ein nach der Aktivierung des Treibstoffs (13) entstehendes Gas aufweist, wobei die Ausströmoffnungen (15) innerhalb der Brennkammer (11) durch eine Filtervorrichtung (16) abgedeckt sind, wobei die Filtervorrichtung (16) von den Ausströmöffnungen (15) beabstandet angeordnet ist und die Filtervorrichtung (16) die Brennkammer (11) in axialer oder auch radialer Richtung in einen Brennraum für den Treibstoff (13) und einen oder mehrere als Freiräume ausgebildete Expansionsräume (18) für das entstehende Gas unterteilt,
**dadurch gekennzeichnet, daß** die Filtervorrichtung (16) innerhalb der Brennkammer (11) derart befestigt ist, daß der Treibstoff (13) federnd an einer Brennkammerseite der Filtervorrichtung (16) anliegt.

2. Gasgenerator nach Anspruch 1, **dadurch gekennzeichnet, daß** die Filtervorrichtung (16) aus einem Gitternetz besteht.

3. Gasgenerator nach Anspruch 2, **dadurch gekennzeichnet, daß** das Gitternetz aus einem metallischen oder einem hitzebeständigen Verbundwerkstoff herstellbar ist.

4. Gasgenerator nach einem der vorhergehenden Ansprüche, **dadurch gekennzeichnet, daß** die Filtervorrichtung (16) eine in Strömungsrichtung des Gases ausgerichtete Sicke (19) aufweist, deren Sickenboden (20) an einer Innenwand (21) der Brennkammer (11) zwischen den Ausströmöffnungengen (15) zur Anlage kommt.

5. Gasgenerator nach Anspruch 4, **dadurch gekennzeichnet, daß** der Sickenboden (20) an der Innenwand (21) der Brennkammer (11) angeschweißt oder durch einen hitzebeständigen Kleber befestigt ist.

6. Gasgenerator nach einem der vorhergehenden Ansprüche, **dadurch gekennzeichnet, daß** ein Brennkammerfilter (16) vorgesehen ist, der zwischen dem Treibstoff (13) und der Brennkammerseite der Filtervorrichtung (16) angeordnet ist.

7. Gasgenerator nach einem der vorhergehenden Ansprüche, **dadurch gekennzeichnet, daß** die Ausströmöffnungen (15) die Brennkammer (11) mit einer Filterkammer (12) verbinden.

8. Gasgenerator nach einem der vorhergehenden Ansprüche, **dadurch gekennzeichnet, daß** die Ausströmöffnungen (15) düsenartig ausgebildet sind und vorzugsweise einen Einsatz aus Metall besitzen.

9. Gasgenerator nach einem der vorhergehenden Ansprüche, **dadurch gekennzeichnet, daß** die Filtervorrichtung (16) mit einem Übermaß gegenüber der Größe der Brennkammer (11) gefertigt und im Bereich der Ausströmöffnung (15) durch Einpressen lagefixiert ist.

## Claims

1. A gas generator (10) for an airbag system of a vehicle, comprising a combustion chamber (11) to accommodate a propellant (13) which is able to be activated, which chamber has outflow openings (15) for a gas which is generated after the propellant (13) is activated, the outflow openings (15) being covered by a filtering device (16), inside the combustion chamber (11), the filtering device (16) being arranged spaced apart from the outflow openings (15), and the filtering device (16) dividing the combustion chamber (11) in the axial or also in the radial direction into a combustion space for the propellant (13) and one or more expansion chambers (18), which are configured as free spaces, for the gas which is generated, **characterized in that** the filtering device (16) is secured inside the combustion chamber (11) such that the propellant (13) lies resiliently against a combustion chamber side of the filtering device (16).

2. The gas generator according to Claim 1, **characterized in that** the filtering device (16) consists of a grid network.

3. The gas generator according to Claim 2, **characterized in that** the grid network is able to be produced from a metallic or a heat-resistant composite material.

4. The gas generator according to any of the preceding claims, **characterized in that** the filtering device (16) has a bead (19) aligned in the flow direction of the gas, the bead base (20) of which comes to lie against an inner wall (21) of the combustion chamber (11) between the outflow openings (15).

5. The gas generator according to Claim 4, **characterized in that** the bead base (20) is welded to the inner wall (21) of the combustion chamber (11) or is fastened by means of a heat-resistant adhesive.

6. The gas generator according to any of the preceding claims, **characterized in that** a combustion chamber filter (16) is provided, which is arranged between the propellant (13) and the combustion chamber side of the filtering device (16).

7. The gas generator according to any of the preceding claims, **characterized in that** the outflow openings (15) connect the combustion chamber (11) with a filtering chamber (12).

8. The gas generator according to any of the preceding claims, **characterized in that** the outflow openings (15) are constructed in the manner of a nozzle and preferably have an insert of metal.

9. The gas generator according to any of the preceding claims, **characterized in that** the filtering device (16) is manufactured with an oversize with respect to the size of the combustion chamber (11) and is fixed in position in the region of the outflow opening (15) by pressing in.

## Revendications

1. Générateur de gaz (10) pour un système de coussin à gaz d'un véhicule comportant une chambre de combustion (11) pour loger un combustible (13) susceptible d'être activé, laquelle présente des orifices d'extrémité vers l'extérieur (15) pour un gaz qui est engendré après l'activation du combustible (13), les orifices d'écoulement vers l'extérieur (15) étant recouverts à l'intérieur de la chambre de combustion (11) par un dispositif de filtration (16), le dispositif de filtration (16) subdivisant la chambre de combustion (11) dans le sens axial ou aussi dans le sen radial en un espace de combustion pour le combustible (13) et en un ou plusieurs espaces d'expansion (18), réalisés comme espaces libres, pour le gaz qui est engendré, **caractérisé en ce que** le dispositif de filtration (16) est fixé à l'intérieur de la chambre de combustion (11) de telle sorte que le combustible (13) repose de manière élastique sur un côté chambre de combustion du dispositif de filtration (16).

2. Générateur de gaz selon la revendication 1, **caractérisé en ce que** le dispositif de filtration (16) est constitué par un réseau de treillis.

3. Générateur de gaz selon la revendication 2, **caractérisé en ce que** le réseau de treillis peut être réalisé en un matériau composite métallique ou résistant à la chaleur.

4. Générateur de gaz selon l'une des revendications précédentes, **caractérisé en ce que** le dispositif de filtration (16) présente une moulure (19) orientée dans le sens de l'écoulement du gaz, dont le fond (20) vient en appui sur une paroi intérieure (21) de la chambre de combustion (11) entre les orifices d'écoulement vers l'extérieur (15).

5. Générateur de gaz selon la revendication 4, **caractérisé en ce que** le fond de moulure (20) est soudé sur la paroi intérieure (21) de la chambre de combustion (11) ou fixé par un adhésif résistant à la chaleur

6. Générateur de gaz selon l'une des revendications précédentes, **caractérisé en ce qu'**il est prévu un filtre (16) de chambre de combustion qui est agencé entre le combustible (13) et le côté chambre de combustion du dispositif de filtration (16).

7. Générateur de gaz selon l'une des revendications précédentes, **caractérisé en ce que** les orifices d'écoulement vers l'extérieur (15) relient la chambre de combustion (11) à une chambre de filtration (12).

8. Générateur de gaz selon l'une des revendications précédentes, **caractérisé en ce que** les orifices d'écoulement vers l'extérieur (15) sont réalisés sous forme de buses et possèdent de préférence un insert en métal.

9. Générateur de gaz selon l'une des revendications précédentes, **caractérisé en ce que** le dispositif de filtration (16) est fabriqué avec une dimension plus grande que la taille de la chambre de combustion (11) et est fixé dans la zone de l'orifice d'écoulement vers l'extérieur (15) en étant enfoncé à force.
